# EUROPEAN PATENT SPECIFICATION

(11) **EP 0 566 407 B1**
(45) Date of publication and mention of the grant of the patent: **17.03.1999**
(21) Application number: 93302928.2
(22) Date of filing: 15.04.1993
(51) Int. Cl.: H04Q 7/24, H04B 7/26, H04L 29/06

(54) **Cellular telephone network including a local area network**
Zellulares Telefonnetzwerk mit einem lokalen Netzwerk
Réseau télephonique cellulaire incluant un réseau local

(30) Priority: 17.04.1992 US 870073
(43) Date of publication of application: 20.10.1993
(73) Proprietor: Hughes Electronics Corporation, El Segundo, California 90245-0956 (US)
(72) Inventor: Kay, Stanley, Rakville, MD 70853 (US); Mehta, Ashok D., North Patomac, Maryland 20878 (US)
(74) Representative: Johansson, Lars E.

(56) References cited:
- EP-A- 0 473 355
- EP-A- 0 479 477
- WO-A-92/04790
- US-A- 4 926 495
- IEEE TRANSACTIONS ON COMMUNICATION vol. 38, no. 8 , August 1990 , NEW YORK US pages 1272 - 1280 GOODMAN 'Cellular Packet Communications'

## Description

### Technical Field

The invention relates to cellular radio telephone and more particularly to the provision of datagram and dispatch operations. More particularly, the present inventions relates to a cellular mobile telephone system for connecting mobile telephone stations with telephone terminals connected in a public switched telephone network, said system comprising
a plurality of stations,
at least one mobile switching center, said mobile switching center including an interface to said public switched telephone network and an interface to said plurality of stations, and
communication means for communicating messages from one station to at least another station, said communication means including a local area network wherein said stations are nodes of said local area network.

### Background Art

A cellular mobile telephone system as defined above is previously known through EP-A-0 479 477.

The characteristics and features of AMPS-D and IS-54 are described previously. Cellular telephone systems such as are described in the co-pending application as well as other cellular telephone systems, are designed to efficiently connect the mobile subscriber to a conventional telephone connected in the Public Switched Telephone Network (PSTN). There are other applications, however, in which the architecture is either inefficient or incapable of performing a desired function.

One area in which this architecture is inefficient relates to the transmission and the reception of data via standard protocols such as X.25, NSA, TC/IP etc.

Another problem area is dispatch or fleet call operations. A dispatch or fleet call, contrary to a typical cellular telephone call, is a point-to-multipoint operation. A typical dispatch or fleet call voice message is relatively short and it is inefficient to require a dispatch operator to identify each of the perhaps many individuals to whom the message is to be sent, each time a message was transmitted. In addition, the hierarchy described in the co-pending application does not lend itself to efficient mobile-to-mobile conversations even on a point-to-point basis. More particularly, as described in the co-pending application the PSTN is interfaced to a Mobile Switching Center (MSC). The MSC is connected to a base station subsystem which includes at least one Base Station Controller (BSC) and one or more Base Transceiver Stations (BTS). One of the functions of the MSC is that of expanding compressed speech passing from the mobile to the PSTN in one direction and compressing voice traffic passing from the PSTN to the mobile. As a result, in a mobile-mobile call, under certain conditions compressed speech from the mobile is first expanded in a MSC, passed on to the MSC where it is switched back to a (different) MSC. At that point, the expanded speech is then compressed for transmission to the receiving mobile. This double coding of speech is unduly expensive in that it unnecessarily uses coding capacity. Furthermore, the double coding is deleterious to the maintenance of quality in voice traffic.

### Summary of the Invention

The invention overcomes these difficulties and provides capabilities not heretofore present in mobile cellular telephone systems. More particularly, in order to provide these advantages and overcome the difficulties, a plurality of BSCs (hereinafter referred to as "stations") are interconnected by a local area network referred to as a Traffic Interconnect Local area network (TIL). The station interface to the local area network is provided by a Switching Interconnect Module (SIM).

Voice traffic in a mobile-mobile conversation is received at a SIM in compressed form from an RF segment. Inasmuch as the conversation is destined for another mobile, it is transmitted by the SIX, still in compressed form, onto the local area network. That message is retrieved from the local area network by another station which then transmits it to the receiving mobile over an appropriate RF segment. In this fashion, the compressed speech transmitted by the transmitting mobile is not expanded until it reaches the receiving mobile. By this procedure double coding of speech is avoided.

Because of the mobility of the mobile receivers in a cellular telephone system, the identity of the cell within which a particular mobile station is at any given time is something which may need to be determined before voice traffic can be transmitted to that mobile. In a typical fixed station-to-mobile scenario, the time it takes to locate the mobile may be an insignificant portion of the total duration of a conversation. On the other hand, in a dispatch or fleet call operation where the transmission may be very brief, it would be particularly inefficient to hold up completion of the transaction pending a location of each of the mobiles for which the traffic is destined. Consequently, at least for those mobiles taking part in a dispatch or fleet call operation, the mobiles have the burden of registering with the station controlling a cell when that cell's zone of coverage is entered. As such a mobile moves from one cell to another, it registers with the station controlling the new cell it is entering since all of the stations freely exchange registration information; each new registration effectively de-registers the mobile from its previous cell. As a consequence of registration, therefore, a station can maintain a record of the mobiles within each zone of coverage, or at least a record of the subset of mobiles which are potential recipients in a dispatch or fleet call operation.

Furthermore, in order to handle dispatch or fleet call operations, a set up transaction takes place between a dispatch initiator and a station within whose zone the dispatch initiator is located. This dispatch setup operation transfers, to the station, the identification of each of the mobiles which are to take part in the fleet call or dispatch operation.

Because of the registration information, when a station receives a dispatch setup, it can readily determine which of the members of the dispatch or fleet call operation are within its zone of coverage and which mobiles are not. The setup message, identifying the dispatch pool and its members, may also be sent to the other stations along the TIL, allowing the other stations to register the pool and the identity of its members. Having registered the pool, dispatch transactions can be accommodated, either point-to-multipoint or point-to-point, without further specifying the voice traffic recipient. More particularly, assume that after having transmitted a dispatch setup message, a dispatch initiator transmits a voice message. When that message is received at the station, it is identified an having been received from the dispatch initiator. The identification of other mobiles in the pool serves to provide the necessary addressing information. For those members of the pool which are registered at the station at which the message from the dispatch initiator is received, the station itself can complete the transaction by transmitting the message to the appropriate mobiles. For mobiles which are not registered at the station, the station transmits a message on the TIL, including the identification of the pool. At each other station on the TIL, the address information is compared to the identification of pools associated with mobiles registered for that station. In the event there is a match, the message is copied from the TIL and used to transmit the information to the appropriate mobile. Similar processing occurs in the event that a member of the dispatch pool other than a dispatch initiator replies to a voice message with a voice reply. The voice reply need not be addressed inasmuch as the station has already registered the pool and from that registration can imply the appropriate address for the voice message. Assuming the dispatch initiator is not registered in the same station as is the replying mobile, the station merely puts the voice message on the TIL along with the identification of the pool.

Typically, in a dispatch operation, the dispatch operator's voice messages are intended for each of the other members of the pool whereas replies by the other members of the pool are only intended for the dispatch operator. This procedure is implemented as already described. However, it is also possible to provide for conference calling arrangements wherein the reply is also transmitted to each of the other members of the pool in addition to the dispatch initiator. Clearly, inasmuch as the pool is identified in each of the stations, by identifying the members of the pool, the stations, on receiving a voice reply to a dispatch transaction, can clearly copy that reply to each of the members of the pool in addition to the dispatch initiator.

Rather than addressing the recipient mobiles, dispatch messages need only identify the appropriate pool. Each station, having information respecting not only the pool, but each of its members, can determine from the identify of the mobiles registered, whether or not it has registered any member of any pool. As such a station seeing a message on the TIL identifying only the pool can determine whether or not the message need be copied by determining whether or not a member of that pool is currently registered. Because of the speed of messages on the TIL it is desirable for each station to maintain a running record of any pool for which a member is currently registered as mobiles register and are removed from registration.

While the dispatch initiator may be a mobile, that is not essential to the invention. The dispatch initiator may operate from a station connected in the PSTN. The operators station or associated equipment provides the necessary digital control information, i.e., start of a voice message, identification of the recipient mobiles in the pool, etc.

The Traffic Interconnect Local area network (TIL) also provides connectivity for datagrams. More particularly, using the same registration techniques already described in the case of a dispatch or fleet call operation, a data source can be registered in the station within whose zone of coverage the data source lies. The registration information will also include the identification of the addressee for any data originated by the source. The identification of the addressee may also include (either explicitly or implicitly) an identification of the particular protocol which is employed in the data transmission. Having registered this information at the station, when the data source initiates a data transmission, the information as to the intended recipient of that information need not be explicit. More particularly, the SIM will direct the information to the TIL. The TIL may have one or more data gateway nodes located thereon. The message from a SIM will include an address identifying the appropriate gateway either explicitly or implicitly. In the latter case the message will identify the destination and the appropriate gateway will match the destination address with an address previously registered with the gateway. Similarly, data is transmitted to a particular data terminal in the opposite direction using the same TIL relying on the fact that the associated SIM has information respecting the data terminals within its zone of coverage so that a datagram carrying such an address appearing on the TIL will be copied by the SIM and the information transmitted to the data terminal.

Accordingly, in one aspect the invention provides a cellular mobile telephone system for connecting mobile telephone stations with stations connected in a public switched telephone network, said system comprising:
a plurality of stations,
at least one mobile switching center, said mobile switching center including an interface to said public switched telephone network and an interface to said plurality of stations, and
communication means for communicating messages from one station to at least another station, said communication means including a local area network wherein said stations are nodes of said local area network, said telephone system exhibiting the characterizing features of claim 1.

### Brief Description of the Drawings

The invention will be further described in the folloving portions of this specification when taken in conjunction with the attached drawings in which:
Fig. 1 is a block diagram of a cellular telephone system incorporating the present invention;
Fig. 2 is a more detailed block diagram showing the components coupled to the Traffic Interconnect Local area network;
Fig. 3 illustrates a preferred arrangement of traffic and control channels in terms of frequency vs. time for use in accordance with the present invention;
Fig. 4 illustrates the protocol used in the datagram transmission between a datagram initiator and a particular gateway;
Fig. 5 illustrates a dispatch setup and voice traffic transmission in a dispatch operation in accordance with the present invention;
Fig. 6 shows some elements of the Switching Interconnect Module; and
Fig. 7 shows the components of a typical gateway.

### Detailed Description of Preferred Embodiments

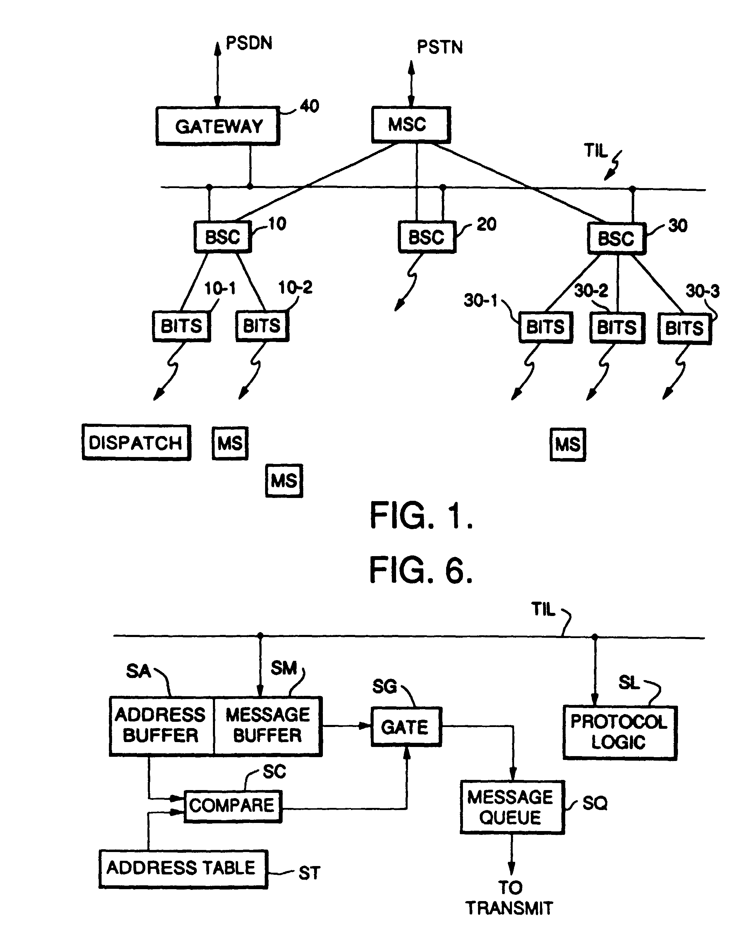

Fig. 1 illustrates the major components of the cellular mobile telephone system in accordance with the present invention. As shown in Fig. 1, the Mobile Switching Center (MSC) interfaces to the PSTN on the one side and to several stations (BSCs) 10, 20 and 30 on the other side. Stations 10 and 30 are similar to each other in that they each interface in turn to multiple Base Transceiver Stations. Station 10 interfaces with BTSs 10-1 and 10-2 whereas station 30 interfaces with BTs 30-1, 30-2 and 30-3 respectively. Each BTS includes a radio interface and each radio interface operates exclusively within a predefined region in space, i.e. a cell or a portion of a cell. Station 20 also includes a radio interface but that radio interface is incorporated in the station. Several Mobile Stations (MS) are shown in Fig. 1; it should be understood that Fig. 1 only illustrates several mobile stations for convenience. One of the stations which is in communication with the cellular telephone system over a radio interface is identified as a dispatch station. That station need not be a mobile station although there is nothing in the present invention which precludes a mobile station from operating as a dispatch station.

The Traffic Interconnect Local area network (TIL) may be a conventional local area network wherein each of the stations 10-30 is a node thereof. In addition, the gateway 40 is another node of the TIL. As shown in Fig. 1 the gateway 40 has an interface to a Public Switched Data Network (PSDN). While Fig. 1 shows only a single gateway, it should be understood that that showing is only illustrative. Multiple gateways, each perhaps operating on a different data transmission protocol may be nodes of the TIL. Furthermore, if desirable or necessary, the TIL may include more than one LAN.

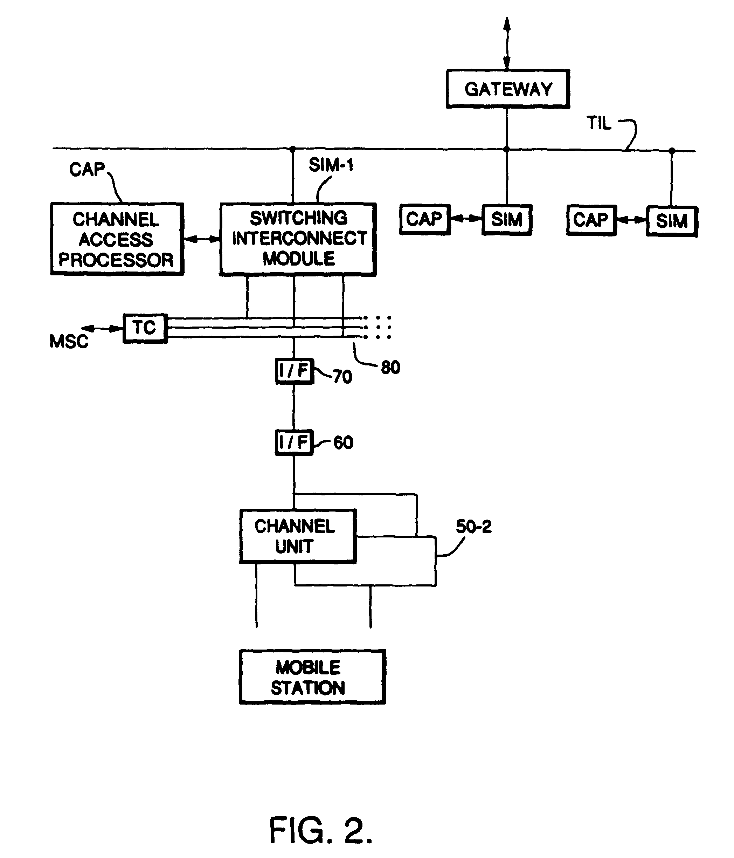

Fig. 2 shows some of the apparatus of Fig. 1 in more detail, revealing some of the components within a typical BTS and the components of one of the stations such as stations 10, 20 or 30. More particularly, the BTS includes a plurality of channel units, channel units 50-1 and 50-2 are shown in Fig. 2. The channel units are coupled in turn to BTS/station interface 60 which is coupled to a station/BTS interface 70 which in turn is coupled to a bus 80. The bus 80 in turn is connected to a Switching Interconnect Module which is connected to a Channel Access Processors (CAP). The bus 80 is also connected to a switching transcoder module (STM), the output of which is coupled to the MSC. On the other hand, the output of the SIM is coupled to the TIL which, as is seen in Fig. 1, is coupled to other stations (other than the one illustrated in Fig. 2) as well as to the gateway 40. Each of the channel units, the I/F 60, I/F 70, SIM and TIL, carries voice traffic in compressed form. On the other hand, the STM carries out expansion on compressed voice for transmission to the MSC and compression on voice traffic received from the MSC.

The switching transcoder STM handles traffic to and from the MSC, i.e. traffic to and from the PSTN. The SIM (and the associated CAP), on the other hand, handle traffic to and from the TIL. For dispatch or gateway operations, the SIM will copy a message from the bus 80 and place it onto the TIL if the source of that message was a source which is in RF communication with one of the associated channel units 50-1 or 50-2. On the other hand, and as will be described hereinafter, message traffic traveling on the TIL which is destined for a mobile station within the purview of a particular station (such as the one shown in Fig. 2) will be copied from the TIL by the SIM. That traffic will be forwarded to an appropriate channel unit where it will be formatted and transmitted to the destination receiver. The manner in which this operation takes place will be described below. That traffic may be voice messages in compressed form or datagrams.

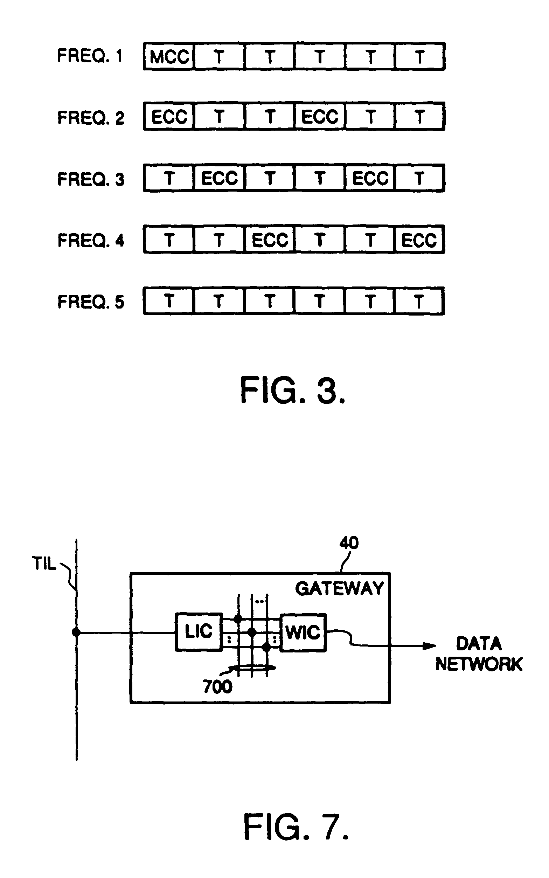

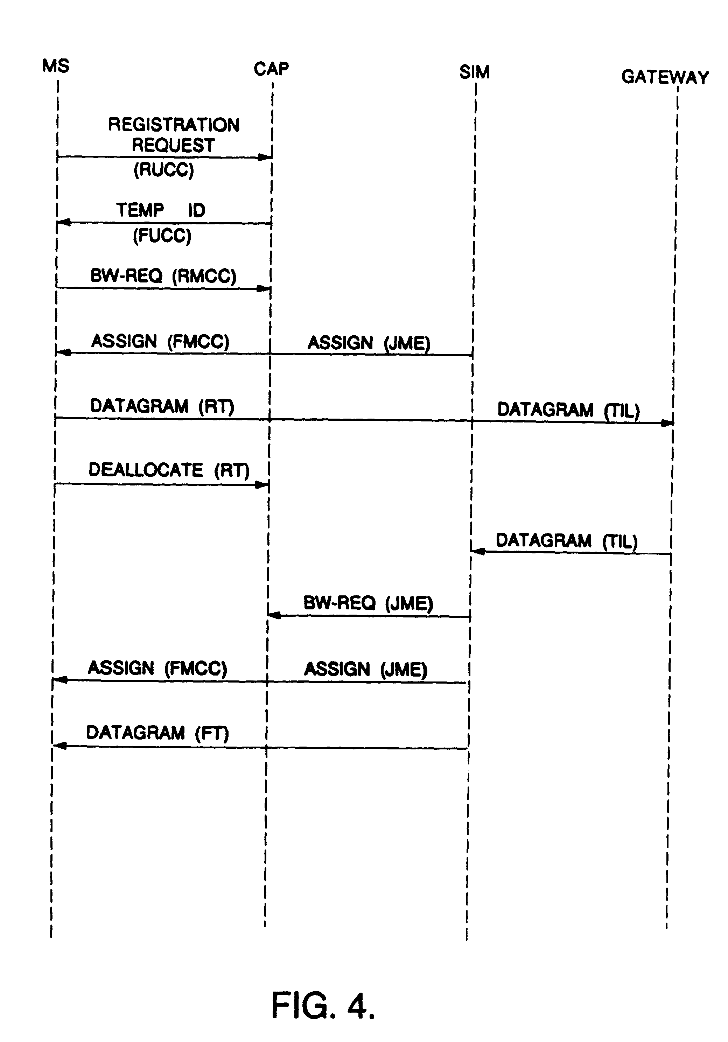

Fig. 3 illustrates a typical DSI pool (similar to Fig. 4 in the parent application). Fig. 3 differs from the DSI pools shown in the parent application in two respects. Firstly, a Master Control Channel (MCC) is shown which is not shown in the parent application. The MCC is added to handle user registration and datagram bandwidth requests as are described below. Fig. 3 shows an ECC, the E-TDMA control channel. This differs from Fig. 4 in the parent application in that the control channel shown in Fig. 4 of the parent application is an analog channel whereas the ECC of Fig. 3 is a digital channel.

Before describing several operations in which the invention finds use it is worthwhile to set the background. There are two different accepted forms for the cells in a cellular system. In one form each cell is hexagonal in shape, the RF equipment is optimally located at or near the center and employs omni-directional antennas. As traffic increases the cell may be split into several regions. In this form the RF equipment is located at or near the vertices of the hexagon and the cell area restriction is implemented using directional antennas. The invention finds use with either form of cell and therefore to simplify the following description the term sector is used to apply to either a restricted cell or to the entire cell if it is not restricted.

When used in a dispatch application, a transaction request (dispatch setup) on the MCC is used to define the routing for the dispatch transaction. The routing establishes a multi-destinational, multi-source conferencing capability over many cells in the cellular network so that only cells with mobile stations named in the transaction request are activated. Once the routing has been established by use of the MCC channel, either voice activated or push-to-talk activation can be used to carry voice over the air.

### Dispatch Scenario

When a MS powers up, if it is configured for dispatch operation, it performs a registration function as follows. The MS scans the frequencies and locks to the strongest frequency with a MCC. The MS sends a Registration Request on a reverse MCC (RMCC). When received at a BSC, the station performs the following:
1) communicates with the MSC to authenticate the MS and retrieve the attributes for the MS, i.e. dispatch;
2) sends a registration acknowledgement to the MS with the following: the number and frequency of traffic channels, the E-TDMA control channel configuration in the traffic channels, adjacent cell information and a mobile identification.

The MS continues to listen to the ECC, both for the station in which it is registered as well as for adjacent stations. When the MS detects that an adjacent channel is getting "stronger", it attempts to register with the adjacent cell.

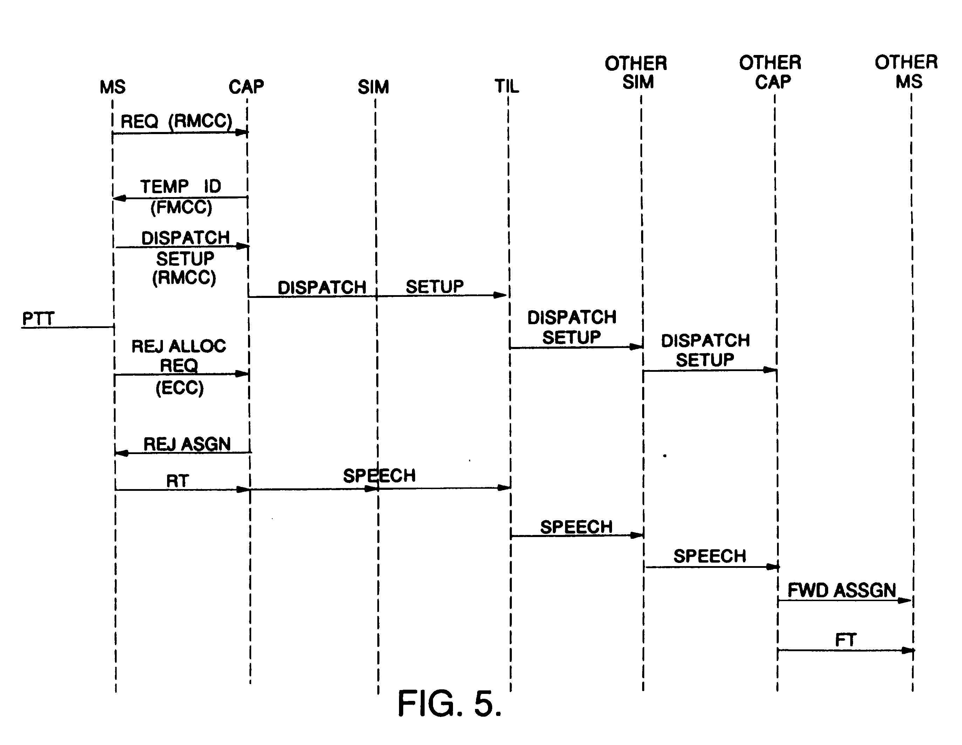

In this fashion, every MS capable of dispatch operation and which is powered on is registered in one or another of the stations in the cellular telephone system. Prior however to initiating dispatch transactions, a dispatch setup is required. The dispatch setup will normally be a transaction carried out by the dispatch initiator, i.e. the dispatcher. In other respects, the dispatcher may be just another typical MS. In the setup operation, a control message is transmitted which identifies each of the MSs to which dispatch transactions should be addressed. This includes not only those MSs registered with the station which receives the dispatch setup message, but it may well include MSs registered in other stations. This operation is shown in the upper portion of Fig. 5.

Fig. 5 illustrates the message transaction sequence carried out between a mobile station (MS), a channel access processor (CAP) an associated SIM and a TIL. Fig. 5 is drawn so that time proceeds from top to bottom.

A first event shown in Fig. 5 is the Registration REQ transmitted on the RMCC by a MS, in this case, the dispatch initiator. In conformance with the diversity features of E-TDMA as described in the parent application, control messages, like the Registration REQ are preferably sent with diversity. Inasmuch as B-TDMA is not essential to use of the invention, however, the use of diversity is not essential. The CAP responds, on the FMCC, with a temporary ID for the MS. The MS responds with a dispatch setup message on a RMCC. AS indicated, the dispatch setup identifies each of the other MSs involved in the dispatch operation. This information is registered at the CAP. This information is passed along from the CAP through the SIM and the TIL to other stations. As a consequence, each of the stations 10-30 included in any cellular telephone system will maintain the identification of at least certain of the dispatch pools, that identification including the identification of every MS in the pool. This information will be maintained for a preselected time-out period, however, every time a message is transmitted to the pool, the time-out period will be extended.

Fig. 5 also shows that subsequent to the transmission of the setup message, the dispatch initiator initiates a voice transaction, by operating a push-to-talk (PTT) switch. Those skilled in the art will understand that detection of voice initiation could be used in lieu of the PTT. In any event, an initial event is the transmission of a reverse allocation request (REV ALLOC REQ) on the ECC. As described in the co-pending application, the reverse allocation request includes at least the temporary mobile ID. This identities the reverse allocation request as having come from the originator of the dispatch setup message and therefore it is directed to the CAP. The CAP responds with a reverse assignment (REV ASGN). This data identifies a particular voice channel. The MS then employs the assigned channel (RT) and transmits a voice transaction. Although Fig. 5 shows the REV ALLOC and REV ASGN as single events, in practice, the reverse allocation request and response may be sent with time, frequency and power diversity as described in the parent application. Furthermore, the RT illustrated in Fig. 5 may only be the initial speech spurt in the message. Each speech spurt will terminate (as again described in the parent application) with a reverse deallocation request and each subsequent speech spurt will be initiated with an additional reverse allocation request and a reverse assignment and terminate with a reverse deallocation request.

Each speech spurt will, however, because it is identified as being sourced at this particular MS, be noted as a speech transaction in a dispatch pool. The CAP and SIM will formulate and transmit a speech spurt to each MS registered with this particular station through an appropriate BTS. In addition, if any member of the pool is not registered with this particular station, a message will be transmitted on the TIL for receipt by each such other MS. At another such station, for example one in which such a MS is registered, the message will be copied by the corresponding SIM and formulated into a speech spurt for transmission to the identified MS. A forward speech allocation is made as shown. In this fashion, the dispatch transaction is accomplished, in other words, each MS in the pool will receive (subject to radio frequency capacity limitations) the voice traffic.

Complementary operation is also envisioned. In other words, if a member of the dispatch pool seeks to reply or otherwise transmit voice traffic to other members of the pool, operations to similar to that shown in Fig. 5 beginning with the PTT will occur. In other words, a replying MS will, on operation of a PTT (or operation of a voice detection switch) initiate a reverse allocation request, on receiving a reverse assignment will transmit reverse traffic to the associated station. The station, having information respecting the particular dispatch pool within which the MS is registered will be able to segregate the other pool members which are registered with it from other pool members which are not registered with it. In respect of those pool members registered with it, a message will be formulated and transmitted to the receiving MSs. For MSs not registered with that particular station, the corresponding SIM will transmit a message on the TIL addressed for receipt by each of the other MSs. In this fashion, reply traffic may be transmitted by a member of the pool and received by each of the other members of the pool.

In order to implement some of the processing which has just been described, the station necessarily has had identified to it, in a received dispatch setup message, the identity of the members of at least one dispatch pool. Table 1 below shows a typical format for this information.

**Table 1**

| Pool ID | Members |
|---|---|
| J | 7, 13, 42, 76, 77 |
| K | 3, 9, 15, 27, 33 |

The CAP also has visibility of those mobile stations which are suitable for dispatch operation and which are registered with the station. Table 2 shows the format of that information.

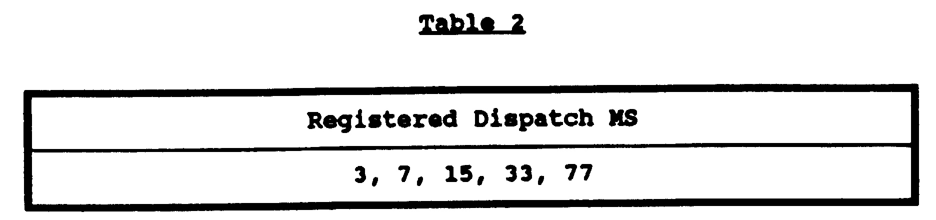

The data shown in Table 1 may be received by a CAP from a dispatch setup transaction which it directly receives over the air. However, information as to the members of a pool may also be received over the TIL from another station. Assume that a CAP at a given station (station 20 for example) maintains information such as is shown in Tables 1 and 2 and the CAP receives a voice transaction from MS 7. Reference to Table 2 reveals that MS 7 is engaged in dispatch operations. Reference to Table 1 shows that MS 7 is in pool J. From the information given in Table 1 with respect to pool J, the CAP extracts information indicating that of the other members of pool J, MS 77 is registered. Accordingly, the station formulates and transmits a copy of the voice transaction received from MS 7 to MS 77. The CAP also orders the associated SIM to formulate messages for transmission on the TIL. Those messages may be explicitly addressed to MS 13, 42 and 76 inasmuch as they are also members of the pool J but not registered with this station. Preferably, however, only a single message is sent, addressed to pool J. If, for example, station 20 has no registered mobiles in pool J, the message may be ignored. On the other hand, at station 30, where MS 13 and 42 are registered, the message will be copied and then sent, explicitly addressed to MS 13 and MS 42.

In the foregoing description the dispatch initiator has been described as a mobile. However a dispatch initiator need not be a mobile. In those cases where a dispatch initiator is not a mobile, it is only necessary for the dispatch initiator to include processing capabilities so that the control information from the operator, i.e., the request for a dispatch setup be properly formulated. Typical mobiles include a keypad for addressing and control purposes. The mobile also includes apparatus for responding to key depressions by encoding corresponding data, formatting and transmitting the data. A non-mobile dispatch station requires similar capabilities. However, rather than transmitting control (and voice) over an RF link, the non-mobile dispatch station typically transmits voice and data over a land-line to a gateway, such as the gateway 40. Typically the dispatch initiator will be connected to a gateway, such as the gateway 40. The dispatch originated control information is packetized and sent to the gateway. At the gateway, operations similar to the previously described operations at the SIM take place. In other words the pool is identified along with the associated mobile members; that data is sent over the TIL to other stations. Typically the only member of the pool registered at the gateway will be the initiator. Other stations receiving data on the pool will identify whether or not pool members are registered. When voice traffic is transmitted the gateway will formulate and transmit the traffic on the TIL along with the identity of the pool with which the traffic is associated. In this fashion the traffic will be transmitted to the appropriate pool members as already described.

### Datagram Scenario

For consistency, the following description refers to a source of a datagram as a MS or a mobile. It should be understood that a datagram source requires station equipment similar to that of the mobiles referred to herein. However, there is no requirement that such a station need have the capability of motion. Fig. 4 shows the transactions occurring in a datagram operation. In many respects datagram operation is similar to the dispatch operation already described. There may, but not necessarily, be several variations. Rather than having each mobile taking part in a datagram operation register in the station controlling a sector, a larger operating region, termed a Local Area Identifier (LAI), may be used. The LAI spans several sectors and registration in any station controlling a sector of a LAI is valid for any sector of a LAI. The ID received in registering in one sector may be used for any sector of a LAI. Conversely transmissions to a mobile registered to a LAI necessarily is transmitted in each sector of a LAI. Thus the advantage of limiting the need for frequent registrations is balanced by the need for transmissions in each sector of a LAI. Another variation is whether the mobile registers (whether in a sector or in a LAI) on entering the region or only on the need to send a datagram. If the latter variation is used then account must be taken of the need to transmit to such a mobile which, perhaps may not be registered with any station or LAI. One alternative is to prohibit messages to the mobile. Alternatively the mobile can be paged, register after receiving the page, and only after such registration is the message transmitted. As shown in Fig. 5, a first event is the transmission, by an MS, of a registration request on the RMCC for datagram operations. Preferably, this message is sent with time, frequency and power diversity. The registration request not only identifies the source, but identifies it as a datagram source. As such, later transmission from the source will be routed to the SIM. The registration request may also identify a particular one of plural gateways on the TIL to which data from the source should be routed. The CAP responds to the registration request with a temporary ID on the FMCC. The response may also use diversity. Having been assigned a temporary ID, the MS can initiate a datagram at any time thereafter. As shown in Fig. a, the next step in initiating a datagram is the transmission of a BW-REQ on the RMCC. This results in the SIM transmitting an assignment of a time slot on the VME bus to the CAP. The SIM responds rather than an STM since by definition the source is engaged in a datagram operation. The CAP in turn transmits an assignment to the MS on the FMCC. This reverse traffic channel is assigned for the duration of the datagram transmission. Using the assigned channel, the MS transmits its datagram on the RT. The datagram is received by the SIM and transmitted over the TIL to the gateway 40. The gateway 40 then processes the data in accordance with the appropriate protocol. Following completion of transmission of the datagram, the MS transmits a deallocate request (RT). That terminates the datagram transmission transaction. Fig. 4 also shows, however, a datagram transmission initiated by an application, i.e. by a source not located in the cellular telephone system of Fig. 1. That datagram is directed to the gateway 40 by some external apparatus. When received at the gateway 40, the data is formed into a datagram and transmitted on the TIL. The MS for which the datagram is destined will have previously registered with a particular station. The SIM of that station will, on recognizing the address component in a datagram, copy the datagram. Thereafter, the SIM formulates a bandwidth request on the VME bus to the CAP. The CAP in turn transmits a VME bus assignment to the SIM and a traffic channel assignment (on the FMCC) to the MS. Thereafter, the SIM transmits the datagram on the FT to the MS.

While datagrams addressed to mobiles may use unique mobile addresses it is within the scope of the invention to employ broadcast type addressing (like the dispatch operation). In other words a datagram pool may include several mobiles so that data to such a pool will reach each of the pool members just as in the case of the dispatch transaction.

The transaction shown at the upper portion of Fig. 4 may be initiated when the particular MS is powered on. The MS attempts to locate an MCC, i.e. a cell equipped with the datagram capability. To the extent that the MS is within radio coverage of such a system, it transmits the registration request shown at the top of Fig. 4. Not shown in Fig. 4 are the transactions involving the CAP and a MSC, whereby the CAP authenticates the MS. Furthermore, Fig. 4 does not illustrate, although it is contemplated, that the MS may respond to the datagram received as illustrated in the lower portion of Fig. 4. Such a response would typically begin with a bandwidth request on the RMCC as is already shown in Fig. 4.

Fig. 6 shows some of the components of the SIM. The SIM includes a protocol logic element SL which monitors the signals on the TIL and interprets those signals in accordance with the protocol appropriate to the TIL. Those skilled in the art are aware that there are several different protocols for operation of a local area network as well as the configuration of an appropriate logic element SL to implement access of a node to the local area network. The protocol logic SL generates signals which are coupled to the other components in the SIM. The particular signals which are generated and the components to which they are connected vary with the different protocols and so those signals are not shown in detail. However, the SIM includes an address buffer SA and a message buffer SM. At the appropriate time (as governed by the SL) these buffers are enabled to copy signals off the TIL. The SIM includes an address table ST identifying the addressees for whom the SIM is an agent. The contents of the address table ST may identify those MSs registered with the station within which the SIM is a component. When an address has been received and is stored in the SA, the comparator SC will compare the received address with the addressees listed in the table ST. An equal comparison indicates that a message has been received or is being received which is destined for an MS for which the SIM is an agent. Accordingly, the compare element SC signals a gate SG to allow the message contents, from the message buffer SM, to flow into a message queue SQ. Once a message is on the SQ, it is retrieved, appropriately formatted, bandwidth is requested and the message is forwarded to the appropriate MS over a selected radio interface, as is conventional in cellular telephony. Rather than using a mobile specific address, messages on the TIL may only carry pool identification. In that case each station may determine from a dispatch setup message whether or not any members of the pool are registered. If there are members of a pool which are registered then any message carrying such a pool address are copied. In other words, the table ST may identify pools rather than individual mobiles. Thereafter the SIM determines from the pool address which members of the pool are registered. Armed with this information the SIM formulates and transmits the necessary messages over its associated RF segment.

Although it has been mentioned that an MS participating in a datagram application may register with a station when it powers on, this is not essential, i.e. the MS can register only when it has a datagram to send. Under this circumstance, however, it may be necessary for each station to copy all datagrams from the TIL and attempt to locate the appropriate MS.

Another parameter that has not been mentioned is the size of the sector, i.e. the maximum distance between an MS and a serving station. If this distance is large enough, synchronization bursts may be required either at the time of registration, the time of datagram transmission, or both.

Fig. 7 illustrates the components of a typical gateway, such as the gateway 40 shown in Fig. 1. Fig. 7 illustrates that the local are network TIL is coupled to a LAN Interface Card (LIC). The particular form in which LIC is coupled to TIL depends on the particular form of the local area network. Data received from TIL by LIC is output to a bus 700. Data appearing on the bus 700 is, in turn, accepted by WAN Interface Card (WIC). The WIC, in turn, outputs data to an appropriate data network as illustrated in Fig. 7. The LIC and WIC are both commercially available elements and therefore further description is unnecessary.

Although this application shows only a single gateway, it should be understood that this is not a limitation and in fact multiple gateways may be coupled to the TIL. This is an advantage in that each gateway may operate with a different protocol. Furthermore, while Fig. 2 shows a one-to-one relationship between SIMs and CAPs, that too is not essential in that a SIM may be coupled to multiple CAPs, multiple SIMs may be coupled to a single CAP, or both situations may exist. An important hardware advantage is the ability of the SIM to interface to a TIL which may be a very high speed medium. The address comparison, at the SIM for messages passing on the TIL may be implemented in software although additional speed can be obtained by implementing the address comparison and hardware such as by using a content addressable memory. Accordingly, the invention should not be limited to the specific examples described herein.

## Claims

1. A cellular mobile telephone system for connecting mobile telephone stations (MS) with telephone terminals connected in a public switched telephone network, said system com prising
- a plurality of stations (BSC 10, 20, 30),
- at least one mobile switching center (MSC), said mobile switching center including an interface to said public switched telephone network and an interface to said plurality of stations, and
- communication means (TIL) for communicating messages from one station to at least another station, said communication means including a local area network wherein said stations are nodes of said local area network,
**characterized** in that each one of said plurality of stations has an interface to said mobile stations, in that at least one radio frequency station (BITS 10-1, ..., 30-3) is provided, said radio frequency station having a radio frequency interface to said mobile stations for operating exclusively within a region of said cellular mobile telephone system, and in that a station interface to at least one station includes means for transmitting and receiving compressed voice traffic, said station including means to compress voice traffic from said public switched telephone network for transmission to said mobile stations (MS) and means to expand compressed voice traffic from said mobile stations for transmission to said public switched telephone network, and said stations further including an interface for transmitting compressed voice traffic onto said local area network.

2. A system as recited in claim 1, **characterized** in that at least one of said plurality of stations (BSC 10, 20, 30) includes a radio frequency interface to said mobile stations which operates exclusively within one cell of said cellular mobile telephone system.

3. A system as recited in claim 1, **characterized** in that it includes a gateway (40) oupled to said communication link with an interface to a data network.

4. A system as recited in claim 2, **characterized** in that said stations (BSC 10, 20, 30) include an interface to said local area network, said interface including means for monitoring messages on said local area network and means for copying those messages addressed to a mobile station registered with the station of the interface.

## Patentansprüche

1. Zellulares Mobiltelefonsystem zur Verbindung von Mobiltelefonstationen (MS) mit Telefonanschlüssen, die mit einem öffentlichen Telefonwählnetz verbunden sind, wobei das System umfaßt:
- eine Vielzahl von Stationen (BSC 10, 20, 30),
- zumindest eine mobile Vermittlungszentrale (MSC), wobei die mobile Vermittlungszentrale eine Schnittstelle zu dem öffentlichen Telefonwählnetz und eine Schnittstelle zu der Vielzahl von Stationen umfaßt, und
- ein Kommunikationsmittel (TIL) zur Übertragung von Nachrichten von einer Station zu zumindest einer anderen Station, wobei das Kommunikationsmittel ein lokales Netzwerk aufweist, wobei die Stationen Knoten des lokalen Netzwerks sind,
dadurch gekennzeichnet, daß jede der Vielzahl von Stationen eine Schnittstelle zu den mobilen Stationen aufweist, daß zumindest eine Funkstation (BITS 10-1,..., 30-3) vorgesehen ist, wobei die Funkstation eine Funkschnittstelle zu den mobilen Stationen besitzt, um ausschließlich innerhalb eines Gebiets des zellularen mobilen Telefonsystems zu arbeiten, und daß eine Stationsschnittstelle zu zumindest einer Station Mittel zur Übertragung und zum Empfang eines komprimierten Sprachdatenverkehrs aufweist, wobei die Station Mittel, um den Sprachdatenverkehr aus dem öffentlichen Telefonwählnetz zur Übertragung zu den mobilen Stationen (MS) zu komprimieren, und Mittel umfaßt, um den komprimierten Sprachdatenverkehr von den mobilen Stationen zur Übertragung zu dem öffentlichen Telefonwählnetz zu expandieren, und wobei die Stationen des weiteren eine Schnittstelle zur Übertragung eines komprimierten Sprachdatenverkehrs in das lokale Netzwerk aufweist.

2. System nach Anspruch 1, dadurch gekennzeichnet, daß zumindest eine der Vielzahl von Stationen (BSC 10, 20, 30) eine Funkschnittstelle zu den mobilen Stationen umfaßt, die ausschließlich innerhalb einer Zelle des zellularen mobilen Telefonsystems arbeitet.

3. System nach Anspruch 1, dadurch gekennzeichnet, daß es einen Netzverbindungsrechner (gateway, 40) umfaßt, der mit der Kommunikationsverbindung über eine Schnittstelle zu einem Datennetzwerk verbunden ist.

4. System nach Anspruch 2, dadurch gekennzeichnet, daß die Stationen (BSC 10, 20, 30) eine Schnittstelle zu dem lokalen Netzwerk umfassen, wobei die Schnittstelle Mittel zur Überwachung von Nachrichten in dem lokalen Netzwerk und Mittel zum Kopieren dieser Nachrichten umfaßt, die an eine mobile Station adressiert sind, die für die Station der Schnittstelle registriert ist.

## Revendications

1. Système de téléphone mobile cellulaire pour relier des stations téléphoniques mobiles (MS) à des terminaux téléphoniques reliés dans un réseau de téléphone public commuté, ledit système comprenant :
- une pluralité de stations (BSC 10, 20, 30),
- au moins un centre de commutation mobile (MSC), ledit centre de commutation mobile comprenant une interface avec ledit réseau de téléphone public commuté et une interface avec ladite pluralité de stations, et
- un moyen de communication (TIL) pour communiquer des messages d'une station à au moins une autre station, ledit moyen de communication comprenant un réseau de zone locale dans lequel lesdites stations sont des noeuds dudit réseau de zone locale,
caractérisé en ce que chaque station de ladite pluralité de stations a une interface avec lesdites stations mobiles, en ce qu'au moins une station à radiofréquence (BITS 10-1, ..., 30-3) est prévue, ladite station R.F. ayant une interface R.F. avec lesdites stations mobiles pour opérer exclusivement au sein d'une région dudit système de téléphone mobile cellulaire, et en ce qu'une interface de station avec au moins une station comprend un moyen pour transmettre et recevoir des appels vocaux comprimés, ladite station comprenant un moyen pour comprimer les appels vocaux en provenance dudit réseau de téléphone public commuté pour transmission auxdites stations mobiles (MS) et un moyen pour décomprimer les appels vocaux comprimés en provenance desdites stations mobiles pour transmission audit réseau de téléphone public commuté, et lesdites stations comprenant, en outre, une interface pour transmettre les appels vocaux comprimés sur ledit réseau de zone locale.

2. Système selon la revendication 1, caractérisé en ce qu'au moins une station de ladite pluralité de stations (BSC 10, 20, 30) comprend une interface à radiofréquence avec lesdites stations mobiles qui opère exclusivement au sein d'une cellule dudit système de téléphone mobile cellulaire.

3. Système selon la revendication 1, caractérisé en ce qu'il comprend une passerelle (40) couplée à ladite liaison de communication avec une interface avec un réseau de données.

4. Système selon la revendication 2, caractérisé en ce que lesdites stations (BSC 10, 20, 30) comprennent une interface avec ledit réseau de zone locale, ladite interface comprenant un moyen pour contrôler des messages sur ledit réseau de zone locale et un moyen pour copier lesdits messages adressés à une station mobile enregistrée avec la station de l'interface.
